# EUROPEAN PATENT APPLICATION

(11) **EP 3 817 302 A1**
(43) Date of publication of application: **05.05.2021**
(21) Application number: 19382963.7
(22) Date of filing: 04.11.2019
(51) Int. Cl.: H04L 12/403

(54) **METHODS AND APPARATUS FOR EXCHANGING DATA IN A MOBILE TELECOMMUNICATIONS NETWORK**

(71) Applicant: Vodafone IP Licensing Limited, Newbury, Berkshire RG14 2FN (GB)
(72) Inventor: FROST, Timothy, London W2 6BY (GB); RAZAVI, Razieh, London W2 6BY (GB); UCAR, Alper, London W2 6BY (GB)
(74) Representative: Boult Wade Tennant LLP

(57) **Abstract**

Methods and devices for exchanging data between a first device and a second device in a mobile telecommunications network. Methods disclosed herein include establishing a plurality of time-slots for uplink and downlink of data using a Time Division Duplex (TDD) operation on a frequency channel allocated for the TDD operation. A frequency bandwidth within the frequency channel is assigned to each of the plurality of time-slots. At least a first of the time-slots is assigned a first frequency bandwidth and at least a second of the time-slots is assigned a second frequency bandwidth, the first frequency bandwidth being less than the second frequency bandwidth. Data is exchanged between the first device and the second device in the plurality of time-slots and using the frequency bandwidths assigned to each of the time-slots.

## Description

### FIELD OF THE INVENTION

The present disclosure relates to methods and apparatus for use in a mobile telecommunications network. In particular, the present disclosure relates to exchanging data between devices in a mobile telecommunications network using a Time Division Duplex (TDD) mode of operation. The disclosure relates to systems, methods, apparatus and computer software for exchanging data.

### BACKGROUND

A mobile telecommunications network typically allows one or more devices to transmit and/or receive data over the network. For example, a base station may transmit and/or receive Radio Frequency (RF) signals over an air interface managed by the telecommunications network. The RF signals may be received at and/or transmitted from at least one device, such as a terminal. The RF signals may be indicative of data and thus transmitting and receiving RF signals over the network allows for exchange of data over the network.

A plurality of devices may wish to exchange data over the network at substantially the same time. Such devices may be located within signal range of each other such that RF signals transmitted for reception at a first device may also be received at a second device. A variety of different methods and modes of operation may be used in order to distinguish between RF signals intended for different devices. For example, in at least some modes of operation, different frequency channels may be used for communications with different devices. A particular mode of operation which is contemplated herein is a Time Division Duplex (TDD) mode of operation.

A TDD mode of operation may be used when exchanging data between a first and second device in order to distinguish between data sent from the first device to the second device (which may be referred to as downlink) from data sent from the second device to the first device (which may be referred to as uplink). In particular, downlink transmissions may be separated in the time domain from uplink transmissions. This may allow a single frequency channel to be used for both uplink and downlink with uplink being performed during at least a first time-slot and downlink being performed during at least a second time-slot.

Whilst a TDD mode of operation allows a clear distinction between uplink and downlink data transmissions, in at least some situations a TDD mode of operation may be subject to interference from transmissions between other devices in the network. For example, TDD communications between a first device and a second device may be subject to interference from communications between a third device and fourth device situated within signal range of the first device and the second device.

It is in this context that the subject matter contained in the present application has been devised.

### SUMMARY OF THE INVENTION

According to a first aspect of the present disclosure there is provided a method of exchanging data between a first device and a second device in a mobile telecommunications network, the method comprising: establishing a plurality of time-slots for uplink and downlink of data using a Time Division Duplex, TDD, operation on a frequency channel allocated for the TDD operation; assigning to each of the plurality of time-slots a frequency bandwidth within the frequency channel, wherein at least a first of the time-slots is assigned a first frequency bandwidth and at least a second of the time-slots is assigned a second frequency bandwidth, the first frequency bandwidth being less than the second frequency bandwidth; and exchanging data between the first device and the second device in the plurality of time-slots and using the frequency bandwidths assigned to each of the time-slots.

The establishing, assigning and/or exchanging steps may be performed at the first device. The first device may be a network device for transmitting and receiving communications over an air interface. The first device may, for example, comprise a base station. The second device may comprise a terminal. For example, the second device may comprise a User Equipment (UE).

Downlink of data using a TDD operation may comprise transmitting data from the first device to the second device. Uplink of data using a TDD operation may comprise receiving data at the first device and transmitted from the second device.

Exchanging data between the first device and second device may comprise transmitting data to and receiving data from the second device over an air interface. Data may be transmitted to the first device during time-slots which are established for downlink of data using the TDD operation. Data may be received from the first device during time-slots which are established for uplink of data using the TDD operation.

Assigning a first frequency bandwidth to at least a first time-slot and a second (different) frequency bandwidth to at least a second time-slot allows the frequency bandwidth to be adapted to in order to reduce interference with a neighbouring frequency channel. For example, in at least the first time-slot there may be an increased chance of interference with a neighbouring frequency channel. The first, narrower, bandwidth is therefore assigned in order to reduce the interference. In the at least the second time-slot there may be a reduced chance of interference with a neighbouring frequency channel. The second, wider, bandwidth is therefore assigned in order to utilise a large portion (e.g. substantially all) of the bandwidth of the frequency channel, thereby improving an achievable data transfer rate.

The method may further comprise transmitting from the first device to the second device an indication of the frequency bandwidths assigned to each time-slot.

The first device may indicate to the second device which frequency bandwidths are assigned to which time-slots. The second device may use the indication to determine which bandwidth to use in which time-slot. This may be particularly applicable when time-slots established for uplink include at least one time-slot to which the first bandwidth is assigned and at least one time-slot to which the second bandwidth is assigned. In such an example, the indication provided by the first device allows the second device to determine which bandwidth to use for each of their uplink transmissions.

The method may further comprise transmitting from the first device to the second device, an indication of at least one time-slot allocated for uplink and at least one time-slot allocated for downlink.

The indication may comprise an indication which time-slots are allocated for uplink and which time-slots are allocated for downlink. The indication may be provided in the same or a different communication to an indication of frequency bandwidths assigned to each time-slot.

Assigning to each of the plurality of time-slots a frequency bandwidth within the frequency channel may comprise assigning the first frequency bandwidth to at least a first time-slot allocated for one of uplink or downlink and the second frequency bandwidth to a time-slot allocated for the same of uplink or downlink second.

That is, the first frequency bandwidth and the second frequency bandwidth may be assigned to different time-slots allocated for the same type of transmission (uplink or downlink).

For example, the first frequency bandwidth may be assigned to at least a first time-slot assigned for uplink and the second frequency bandwidth may be assigned to at least a second time-slot also assigned for uplink. That is, uplink may be performed using at least two different frequency bandwidths in different time-slots.

Additionally or alternatively, the first frequency bandwidth may be assigned to at least a first time-slot assigned for downlink and the second frequency bandwidth may be assigned to at least a second time-slot also assigned for downlink. That is, downlink may be performed using at least two different frequency bandwidths in different time-slots.

The at least a first time-slot to which the first frequency bandwidth is assigned may comprise a time-slot which is allocated for one of uplink or downlink at the first device and which is allocated for the other of uplink or downlink at a third device situated within interference range of the first device.

That is, the first frequency bandwidth may be assigned to one or more time-slots in which the type of transmission (uplink or downlink) allocated at the first device is different to the type of transmission (uplink or downlink) allocated at the third device. For example, the first frequency bandwidth may be assigned to one or more time-slots allocated for uplink at the first device and downlink at the third device. Additionally or alternatively, the first frequency bandwidth may be assigned to one or more time-slots allocated for downlink at the first device and uplink at the third device.

The first device may be situated within interference range of the third device. The third device may, for example, comprise a base station. The third device may exchange data over a second frequency channel, which neighbours the frequency channel allocated for the TDD operation at the first device. The second frequency channel may be allocated for a TDD operation at the third device. The third device may exchange data using a TDD operation with one or more further devices different to the first and second devices.

Reference to the first and third devices being within interference range of each other is intended to refer to devices which are located and operating in a manner that transmissions from both devices may be received at a single location. For example, first and third devices which are in interference range of each other may have coverage areas which at least partially overlap. A further device (e.g. the second device) situated in a region of overlap between the two coverage areas may receive and detect transmissions from both the first and the third devices. Transmissions from the first and third devices may therefore interfere with each other and the first and third devices may be described as being within interference range of each other.

A time-slot which is allocated for one or uplink or downlink at the first device and allocated for the other of uplink or downlink at the third device may give rise to interference between transmissions to or from the first device and transmissions from or to the third device. The narrower first bandwidth may therefore be assigned to such a time-slot in order to reduce such interference. For example, a frequency guard-band may be introduced between the frequency channel allocated for the TDD operation at the first device and a second frequency channel allocated for a TDD operation at the third device.

In at least some examples, the at least a second time-slot to which the second frequency bandwidth is assigned comprises a time-slot which is allocated for one of uplink or downlink at the first device and which is allocated for the same of uplink or downlink at the third device situated within interference range of the first device. That is, the second frequency bandwidth may be assigned to one or more time-slots in which the type of transmission (uplink or downlink) allocated at the first device is the same as the type of transmission (uplink or downlink) allocated at the third device. In such time-slots, a greater frequency bandwidth may be utilised without introducing interference. A greater frequency bandwidth may increase an achievable rate of data exchange in the at least a second time-slot.

Exchanging data between the first device and the second device in the at least a first of the times slots and using the first frequency bandwidth assigned to the at least a first of the time-slots may comprise exchanging data over a first range of frequencies having the first frequency bandwidth. Exchanging data between the first device and the second device in the at least a second of the times slots and using the second frequency bandwidth assigned to the at least a second of the time-slots may comprise exchanging data over a second range of frequencies having the second frequency bandwidth.

The first range of frequencies may be a sub-range of the second range of frequencies.

The first range of frequencies may be contained within the second range of frequencies. The lower limit of the first range of frequencies may be the same or greater than the lower limit of the second range of frequencies. The upper limit of the first range of frequencies may be the same or less then the upper limit of the second range of frequencies.

The first range of frequencies may be separated from at least one edge of the frequency channel by at least one frequency guard band.

Introducing a frequency guard band at an edge of the frequency channel may reduce any interference with a further frequency channel neighbouring the edge of the frequency channel. For example, the frequency channel may neighbour a second frequency channel at a first edge of the frequency channel. Introducing a frequency guard band at the first edge of the frequency channel provides a frequency separation between the frequency channel and the second frequency channel, thereby reducing interference between the two channels. This may be particularly applicable an a time-slot in which the type of transmission (uplink or downlink) is different in the two frequency channels.

The second range of frequencies may span substantially all of the frequency channel.

Using substantially all of the available bandwidth of the frequency channel may increase an achievable rate of data transfer in time-slots to which the second frequency bandwidth is assigned.

The frequency bandwidths may be assigned to each of the plurality of time-slots prior to exchanging data between the first and second devices in any of the plurality of time-slots.

The first device may establish time-slots for uplink and downlink of data and assign a frequency bandwidth to each of a plurality of time-slots prior to exchanging data with a device in any of the time-slots. In such examples, the first device may transmit an indication of the frequency bandwidths assigned to a plurality of time-slots prior to exchanging data in any of the time-slots. That is, the first device may establish the type of transmission and frequency bandwidths for a group of time-slots (e.g. one or more frames) in advance. Furthermore, the second device may be informed of the allocations in advance and thus may be aware of the type of transmission and frequency bandwidth to be used in each of the time-slots in the group prior to any of the time-slots commencing. That is, a semi-static assignment of time-slots and frequency bandwidths may be carried out.

At least a portion of the frequency bandwidths may be assigned to at least a portion of the plurality of time-slots after exchanging data between the first and second devices in at least some of the plurality of time-slots.

The first device may establish time-slots for uplink and downlink of data and/or assign a frequency bandwidth to each of a plurality of time-slots dynamically and during an exchange of data with the second device. For example, the first device may initially transmit downlink data to the second device in one or more initial time-slots in the first frequency channel using the second frequency bandwidth. The first device may during or after the one or more initial time-slots determine that a subsequent time-slots is to be used for uplink and accordingly assign a frequency bandwidth (e.g. the first frequency bandwidth) to the subsequent time-slot. The first device may therefore assign a frequency bandwidth and/or send an indication of the frequency bandwidth to be used in at least one of the time-slots after exchanging data with the second device in at least some of the time-slots. That is, the first device may assign and/or indicate a frequency bandwidth to be used in time-slots on a dynamic basis and may. For example, the first device may assign and/or indicate a frequency bandwidth of one or more time-slots in a group of time-slots (e.g. one or more frames) during data exchange in the group of time-slots as opposed to doing so in advance of the group of time-slots.

According to a second aspect of the present disclosure there is provided a method of exchanging data between a first device and a second device in a mobile telecommunications network, the method comprising: receiving at the second device and from the first device: an indication of a plurality of time-slots for uplink and downlink of data using a Time Division Duplex, TDD, operation on a frequency channel allocated for the TDD operation; and an indication of a frequency bandwidth, within the frequency channel, which is assigned to each time-slot, wherein the plurality of time-slots includes at least a first time-slot to which a first frequency bandwidth is assigned and at least a second time-slot to which a second frequency bandwidth is assigned, the first frequency bandwidth being less than the second frequency bandwidth; and exchanging data between the first device and the second device in the plurality of time-slots and using the frequency bandwidths assigned to each of the time-slots.

The indication of a frequency bandwidth which is assigned to each time-slot may include an indication that the first frequency bandwidth is assigned to at least a first time-slot allocated for one of uplink or downlink and the second frequency bandwidth is assigned to a time-slot allocated for the same of uplink or downlink second.

The at least a first time-slot to which the first frequency bandwidth is assigned may comprise a time-slot which is allocated for one of uplink or downlink at the first device and which is allocated for the other of uplink or downlink at a third device situated within interference range of the first device.

Exchanging data between the first device and the second device in the at least a first of the times slots and using the first frequency bandwidth assigned to the at least a first of the time-slots may comprise exchanging data over a first range of frequencies having the first frequency bandwidth. Exchanging data between the first device and the second device in the at least a second of the times slots and using the second frequency bandwidth assigned to the at least a second of the time-slots may comprise exchanging data over a second range of frequencies having the second frequency bandwidth.

The first range of frequencies may be a sub-range of the second range of frequencies.

The first range of frequencies may be separated from at least one edge of the frequency channel by at least one frequency guard band.

The second range of frequencies may span substantially all of the frequency channel.

The second device may receive an indication of the frequency bandwidths assigned to each of the plurality of time-slots prior to exchanging data between the first and second devices in any of the plurality of time-slots.

The second device may receive an indication of the frequency bandwidths assigned to at least a portion of the plurality of time-slots after exchanging data between the first and second devices in at least some of the plurality of time-slots.

According to a third aspect of the present disclosure there is provided a computer program comprising instructions which, when carried out, cause a method according to the first or second aspect to be implemented.

According to a fourth aspect of the present disclosure there is provided a first device for exchanging data with a second device in a mobile telecommunications network, the first device being configured to: establish, a plurality of time-slots for uplink and downlink of data using a Time Division Duplex, TDD, operation on a frequency channel allocated for the TDD operation; assign to each of the plurality of time-slots a frequency bandwidth within the frequency channel, wherein at least a first of the time-slots is assigned a first frequency bandwidth and at least a second of the time-slots is assigned a second frequency bandwidth, the first frequency bandwidth being less than the second frequency bandwidth; and exchange data with the second device in the plurality of time-slots and using the frequency bandwidths assigned to each of the time-slots.

The method may further comprise transmitting from the first device to the second device an indication of the frequency bandwidths assigned to each time-slot.

The method may further comprise transmitting from the first device to the second device, an indication of at least one time-slot allocated for uplink and at least one time-slot allocated for downlink.

Assigning to each of the plurality of time-slots a frequency bandwidth within the frequency channel may comprise assigning the first frequency bandwidth to at least a first time-slot allocated for one of uplink or downlink and the second frequency bandwidth to a time-slot allocated for the same of uplink or downlink second.

The at least a first time-slot to which the first frequency bandwidth is assigned may comprise a time-slot which is allocated for one of uplink or downlink at the first device and which is allocated for the other of uplink or downlink at a third device situated within interference range of the first device.

Exchanging data between the first device and the second device in the at least a first of the times slots and using the first frequency bandwidth assigned to the at least a first of the time-slots may comprise exchanging data over a first range of frequencies having the first frequency bandwidth. Exchanging data between the first device and the second device in the at least a second of the times slots and using the second frequency bandwidth assigned to the at least a second of the time-slots may comprise exchanging data over a second range of frequencies having the second frequency bandwidth.

The first range of frequencies may be a sub-range of the second range of frequencies.

The first range of frequencies may be separated from at least one edge of the frequency channel by at least one frequency guard band.

The second range of frequencies may span substantially all of the frequency channel.

The frequency bandwidths may be assigned to each of the plurality of time-slots prior to exchanging data between the first and second devices in any of the plurality of time-slots.

At least a portion of the frequency bandwidths may be assigned to at least a portion of the plurality of time-slots after exchanging data between the first and second devices in at least some of the plurality of time-slots.

According to a fifth aspect of the present disclosure there is provided a first device for exchanging data with a second device in a mobile telecommunications network, the first device comprising: a processor; a memory; and a transceiver wherein the memory stores instructions for execution by the processor and wherein the processor is configured to execute the instructions to cause the first device to: establish, a plurality of time-slots for uplink and downlink of data using a Time Division Duplex, TDD, operation on a frequency channel allocated for the TDD operation; assign to each of the plurality of time-slots a frequency bandwidth within the frequency channel, wherein at least a first of the time-slots is assigned a first frequency bandwidth and at least a second of the time-slots is assigned a second frequency bandwidth, the first frequency bandwidth being less than the second frequency bandwidth; and exchange data, using the transceiver, with the second device in the plurality of time-slots and using the frequency bandwidths assigned to each of the time-slots.

According to a sixth aspect of the present disclosure there is provided a second device for exchanging data with a first device in a mobile telecommunications network, the second device being configure to: receive from the first device: an indication of a plurality of time-slots for uplink and downlink of data using a Time Division Duplex, TDD, operation on a frequency channel allocated for the TDD operation; and an indication of a frequency bandwidth, within the frequency channel, which is assigned to each time-slot, wherein the plurality of time-slots includes at least a first time-slot to which a first frequency bandwidth is assigned and at least a second time-slot to which a second frequency bandwidth is assigned, the first frequency bandwidth being less than the second frequency bandwidth; and exchange data with the second device in the plurality of time-slots and using the frequency bandwidths assigned to each of the time-slots.

The indication of a frequency bandwidth which is assigned to each time-slot may include an indication that the first frequency bandwidth is assigned to at least a first time-slot allocated for one of uplink or downlink and the second frequency bandwidth is assigned to a time-slot allocated for the same of uplink or downlink second.

The at least a first time-slot to which the first frequency bandwidth is assigned may comprise a time-slot which is allocated for one of uplink or downlink at the first device and which is allocated for the other of uplink or downlink at a third device situated within interference range of the first device.

Exchanging data between the first device and the second device in the at least a first of the times slots and using the first frequency bandwidth assigned to the at least a first of the time-slots may comprise exchanging data over a first range of frequencies having the first frequency bandwidth. Exchanging data between the first device and the second device in the at least a second of the times slots and using the second frequency bandwidth assigned to the at least a second of the time-slots may comprise exchanging data over a second range of frequencies having the second frequency bandwidth.

The first range of frequencies may be a sub-range of the second range of frequencies.

The first range of frequencies may be separated from at least one edge of the frequency channel by at least one frequency guard band.

The second range of frequencies may span substantially all of the frequency channel.

The second device may receive an indication of the frequency bandwidths assigned to each of the plurality of time-slots prior to exchanging data between the first and second devices in any of the plurality of time-slots.

The second device may receive an indication of the frequency bandwidths assigned to at least a portion of the plurality of time-slots after exchanging data between the first and second devices in at least some of the plurality of time-slots.

According to a seventh aspect of the present disclosure there is provided a second device for exchanging data with a first device in a mobile telecommunications network, the second device comprising: a processor; a memory; and a transceiver wherein the memory stores instructions for execution by the processor and wherein the processor is configured to execute the instructions to cause the second device to: receive from the first device and using the transceiver: an indication of a plurality of time-slots for uplink and downlink of data using a Time Division Duplex, TDD, operation on a frequency channel allocated for the TDD operation; and an indication of a frequency bandwidth, within the frequency channel, which is assigned to each time-slot, wherein the plurality of time-slots includes at least a first time-slot to which a first frequency bandwidth is assigned and at least a second time-slot to which a second frequency bandwidth is assigned, the first frequency bandwidth being less than the second frequency bandwidth; and exchange data, using the transceiver, with the second device in the plurality of time-slots and using the frequency bandwidths assigned to each of the time-slots.

Within the scope of this application it is expressly intended that the various aspects, embodiments, examples and alternatives set out in the preceding paragraphs, in the claims and/or in the following description and drawings, and in particular the individual features thereof, may be taken independently or in any combination. That is, all examples and/or features of any example can be combined in any way and/or combination, unless such features are incompatible. The applicant reserves the right to change any originally filed claim or file any new claim accordingly, including the right to amend any originally filed claim to depend from and/or incorporate any feature of any other claim although not originally claimed in that manner.

### BRIEF DESCRIPTION OF FIGURES

One or more embodiments of the invention are shown schematically, by way of example only, in the accompanying drawings, in which:
- Figure 1 is a schematic illustration of a telecommunications network;
- Figure 2 is a schematic representation of a TDD mode of operation in two neighbouring frequency channels;
- Figure 3 is a schematic representation of a TDD mode of operation in two neighbouring frequency channels in which at least some time-slots are not aligned in the two frequency channels;
- Figure 4 is a schematic representation of a TDD mode of operation in two neighbouring frequency channels according to an example of the present disclosure;
- Figure 5 is a schematic representation of a TDD mode of operation in two neighbouring frequency channels according to a further example of the present disclosure;
- Figure 6 is a representation of a method according to examples of the present disclosure as performed at a first device;
- Figure 7 is a representation of a method according to examples of the present disclosure as performed at a second device; and
- Figure 8 is a schematic illustration of an example electronic device for use in a mobile telecommunications network.

### DETAILED DESCRIPTION

Before particular examples of the present disclosure are described, it is to be understood that the present disclosure is not limited to the particular network systems, modules and devices or methods described herein. It is also to be understood that the terminology used herein is used for describing particular examples only and is not intended to limit the scope of the claims.

Whilst the present disclosure is generally presented in the context of 5G New Radio (NR) and/or LTE protocols, it will be understood that the teachings of the present disclosure may apply equally to other examples of mobile telecommunications protocols. For example, the teachings presented herein may apply to any situation in which data is exchanged between devices in a telecommunications network using a Time Division Duplex (TDD) mode of operation. One or more devices, nodes or modules of a telecommunications network may operate in accordance with one or more standardised protocols. Suitable examples of standardised protocols may include (but are not limited to) any 3GPP standardised protocol including Fourth Generation (4G), Long-Term Evolution (LTE), LTE-Advanced, Fifth Generation (5G) and/or NR. In at least some examples contemplated herein, different nodes, modules and/or devices of a telecommunications network may operate in accordance with different standardised protocols. For example, a telecommunications network may include at least a first device configured to operate in accordance with a first standardised protocol and at least a second device configured to operate in accordance with a second standardised protocol. Furthermore, a network may include one or more devices, modules and/or nodes configured to operate in accordance with a plurality of different standardised protocols (whether simultaneously or at different times).

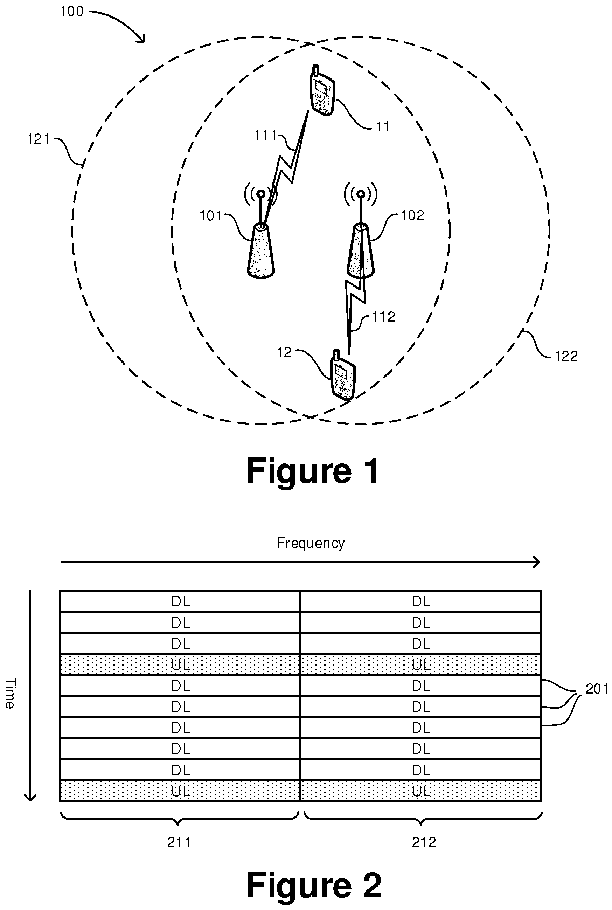

Figure 1 is a schematic illustration of a portion of at least one mobile telecommunications network 100. The portion depicted in Figure 1 includes a first base station 101 and a second base station 102. The first base station 101 provides network coverage within a first coverage area 121 (e.g. a first cell). The second base station 102 provides network coverage within a second coverage area 122 (e.g. a second cell). For example, the first base station 101 may exchange communications (e.g. radio frequency signals) with at least a first terminal 11 situated within the geographical coverage area 121 (e.g. a cell) over an air interface 111. As will be appreciated by a person having ordinary skill in the art, the first base station 101 may exchange communications by transmitting and/or receiving communications in one or more frequency bands assigned to a Radio Access Technology (RAT) used by the first base station 101 and utilising communication protocols specified for the RAT (e.g. standardised communication protocols for the RAT).

Similarly, the second base station 102 may exchange communications (e.g. radio frequency signals) with at least a second terminal 11 situated within the geographical coverage area 121 (e.g. a cell) over an air interface 112. That is, the second base station 102 may exchange communications by transmitting and/or receiving communications in one or more frequency bands assigned to a RAT used by the second base station 102 and utilising communication protocols specified for the RAT (e.g. standardised communication protocols for the RAT).

In at least some of the examples contemplated herein, a RAT used by the first and/or second base station 101, 102 comprises LTE. In such examples, the first 101 and/or second 102 base station may comprise an Evolved Node B (eNB) or a Next Generation Evolved Node B (ng-eNB). In other examples, the first 102 and/or second 102 base station 101 may operate using one or more other RATs. For example, the first 101 and/or second 102 base station 101 may operate using NR frequency bands and/or communication protocols. In such examples, the first 101 and/or second 102 base stations may comprise a Next Generation Node B (gNB).

Whilst not shown in Figure 1, the first base station 101 is typically connected to a core network configured to provide one or more network services through the first base station 101. The second base station 102 may be connected to the same core network as the first base station 101. Alternatively, the second base station 102 may be connected to a different core network as the first base station 101. Generally, the first base station 101 and the second base station may belong to the same or different mobile telecommunications networks.

In at least some examples, the first base station 101 may be operated by a first network operator and the second base station 102 may be operated by a second network operator different to the first network operator. In such examples, at least a first terminal 11 having a subscription with the first network operator exchanges communications with the first base station 101 and at least a second terminal 12 having a subscription with the second network operator exchanges communications with the second base station 102. That is, a base station 101, 102 with which a terminal 11, 12 exchanges communications is determined at least in part by the terminal's network subscription.

Alternatively, the second base station 102 may also be operated by the first network operator. In such examples, one or more terminals 11, 12 may exchange communications with either or both of the first 101 and second 102 base stations. In such a s situation, a base station 101, 102 with which a terminal 11, 12 exchanges communications may be determined by one or more factors such as the geographical location of the terminal 11, 12, compatibility between the terminal 11, 12 and the base stations 101, 102, traffic management in the network and/or one or more additional factors.

As is shown in Figure 1, the first coverage area 121 provided by the first base station 101 includes a least a portion which geographically overlaps with the second coverage area 122 provided by the second base station 102. Typically in situations in which a plurality of base stations 101, 102 operate with at least partially overlapping coverage areas, measures are taken in order to allow network devices to distinguish between communications originating from and/or directed to different base stations 101, 102. For example, a first base station 101 may transmit and receive communications over a first set of frequencies and a second base station 102 may transmit and receive communications over a second set of frequencies, different to the first set of frequencies. However, there may still remain some scenarios in which interference may occur between communications originating from and/or directed to different base stations 101, 102.

A particular scenario which is contemplated herein is the operation of two-base stations 101, 102 in the same frequency band and using a Time Division Duplex (TDD) mode of operation. Figure 2 is a schematic representation of a TDD mode of operation in two neighbouring frequency channels within a frequency band licensed for TDD operation. For example, a radio frequency band such as 3400-3800 MHz may be licensed for TDD operation. However, in general the methods and devices described herein may be applicable for any suitable frequency band. A first base station 101 may operate on a first frequency channel 211 and a second base station 102 may operate on a second frequency channel 212, both frequency channels being within the same frequency band licensed for TDD operation.

Figure 2 depicts a plurality of time-slots 201 in first 211 and second 212 frequency channels, which are assigned for communication using a TDD mode of operation. The first frequency channel 211 may be used by a first base station 101 and the second frequency channel 212 may be used by a second base station 102.

The time-slots 201 shown in Figure 2 are represented by rectangles (only three of which are labelled 201 for ease of illustration) on frequency and time scales. The width of the rectangles 201 in Figure 2 represent the frequency bandwidth assigned to communication over each time-slot and the height of the rectangles represent the duration of each time-slot. In at least some examples, the frequency channels 211, 212 may have frequency bandwidths of approximately 100 MHz. Since, the frequency channels 211, 212 neighbour each other in the frequency domain, central frequencies of the channels 211, 212 may be separated from each other by approximately 100 MHz.

The time-slots 201 may, for example, comprise sub-frames. The time-slots 201 or sub-frames shown in Figure 2 may form at least part of a frame such as those specified by an relevant 3GPP standard.

As will be appreciated by a person having ordinary skill in the art, when using a TDD mode of operation, uplink and downlink communications are separated in the time domain within a given frequency channel. That is, one or more time-slots within a frequency channel 211, 212 are allocated for downlink communications (e.g. transmission from a base station 101, 102 to a terminal 11, 12) and one or more different time-slots within the frequency channel 211, 212 are allocated for uplink communications (e.g. transmission from a terminal 11, 12 to a base station 101, 102).

Also shown in Figure 2 is the type of transmission assigned to each time-slot using a TDD mode of operation. Those time-slots which are assigned for downlink communications are denoted "DL" in Figure 2 and those time-slots which are assigned for uplink communications are denoted "UL" in Figure 2. In the context of a mobile telecommunications network of the type described above with reference to Figure 1, the term uplink denotes data transmitted from a terminal 11, 12 to a base station 101, 102 and the term downlink denotes data transmitted from a base station 101, 102 to a terminal 11, 12. Typically, there may be a number of different possible configurations of time-slots which are assigned for uplink and downlink. For example, a number of different possible configurations of time-slots which are assigned for uplink and downlink may be standardised (e.g. in a relevant 3GPP standard) and a choice may be made as to which standardised configuration to use in a given application. The configuration shown in Figure 2 represents just one such possible configuration and it will be appreciated that any other configuration of time-slots assigned for uplink and downlink may be used instead without departing from the concepts and teachings described herein.

In the particular example which is depicted in Figure 2, time-slots which are assigned for downlink are the same in both the first 211 and second 212 frequency channels. Similarly, the time-slots which are assigned for uplink are the same in both the first 211 and second 212 frequency channels. That is, downlink and uplink are aligned in the first 211 and second 212 frequency channels.

Alignment of uplink and downlink in neighbouring frequency channels 211, 212 as is shown in Figure 2, is typically employed in order to reduce interference between the neighbouring frequency channels. If the frequency channels were not aligned and, for example, the same time-slot were assigned for downlink in the first frequency channel 211 and uplink in the second frequency channel 212 then this may cause interference between the two channels. For example, a first base station 101 transmitting in the first frequency channel 211 (during a time-slot assigned for downlink in the first frequency channel 211 and uplink in the second frequency channel 212) may leak at least some power which is detected by a second base station 102 receiving in the second frequency channel 212 during the same time-slot. Similarly, a first terminal 11 receiving in the first frequency channel 211 may detect at least some power transmitted from a second terminal 12 transmitting in the second frequency channel 212 during the same time-slot. Not synchronising uplink and downlink in neighbouring frequency channels 211, 212 may therefore lead to base station to base station and/or terminal to terminal interference between the two channels.

For the reasons provided above, deployments of TDD at different base stations 101, 102 within interference range of each other and in neighbouring frequency channels are typically carried out by synchronising uplink and downlink at the base stations 101, 102 and in the neighbouring frequency channels. Such alignment restricts any interference between the channels to base station to terminal or terminal to base station interference.

Within the context of this specification, reference to base stations (or other devices or network nodes) being within interference range of each other is intended to refer to base stations which are located and operating in a manner that transmissions from both base stations may be received at a single location. For example, two base stations which are in interference range of each other may have coverage areas 121, 122 which at least partially overlap. A terminal 11, 12 situated in a region of overlap between the two coverage areas 121, 122 may receive and detect transmissions from both the first base 101 and the second base station 102. Transmissions from the first and second base stations may therefore interfere with each other and the base stations may be described as being within interference range of each other.

As was explained above, in some examples a first base station 101 and a second base station 102 may be operated by different network operators. Alignment of uplink and downlink in neighbouring frequency channels may therefore require co-operation between network operators. Alternatively, first and second base stations 102 may be operated by the same network operator. In such an example, alignment of uplink and downlink in neighbouring frequency channels may be established by the network operator.

Operating a first base station 101 such that uplink and downlink is aligned with another base station 102 located within interference range places restrictions on the first base station 101. For example, under some conditions and/or for some applications it may desirable for the first base station 101 to increase or decrease a proportion of time-slots which are assigned for uplink and correspondingly decrease or increase a proportion of time-slots which are assigned for downlink. Additionally or alternatively, it may be desirable for the first base station 101 to change an order or sequence of time-slots which are assigned for uplink and downlink. However, if the first base station 101 is restricted to aligning uplink and downlink with at least one other base station 102, then it is not free to make any changes to the time-slots which are assigned to uplink and downlink. It may therefore be desirable to provide methods by which a base station 101 may change the type of transmission which is assigned to one or more time-slots such that those time-slots are no longer aligned with a second base station 102.

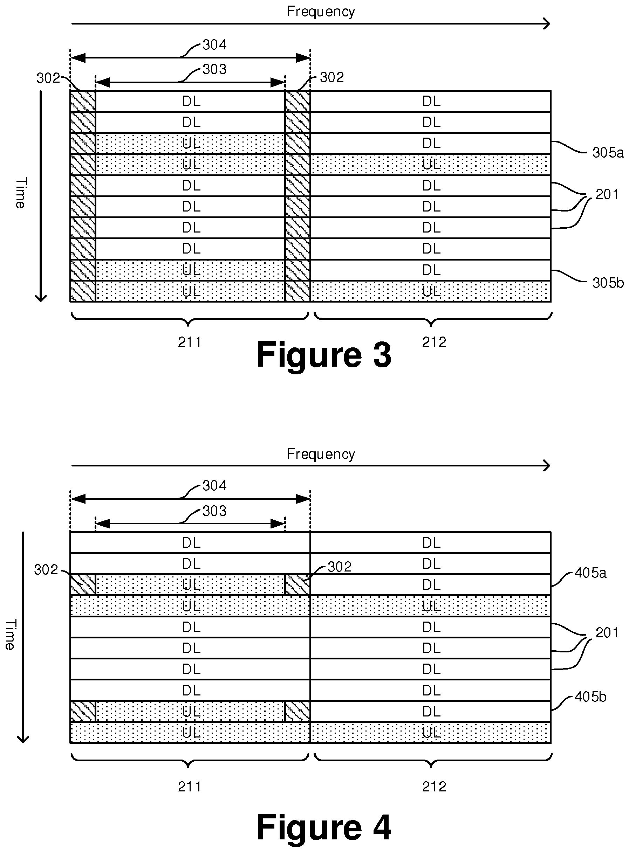

Figure 3, is a schematic representation of a TDD mode of operation in two neighbouring frequency channels 211, 212 in which at least some time-slots are not aligned in the two frequency channels. The representation shown in Figure 3 is similar to that which was described above with reference to Figure 2. That is, the first frequency channel 211 may represent a frequency channel 211 used by a first base station 101 and the second frequency channel 212 may represent a frequency channel 212 used by a second base station 102 which is situated within interference range of the first base station 101. The same reference numerals are used in Figures 2 and 3 to denote corresponding features and not repeated detailed description of these features is provided with reference to Figure 3.

As can be seen in Figure 3, at least some of the time-slots are not aligned in the first 211 and second 212 frequency channels. For example, in a third time-slot denoted 305a in Figure 3 and in a ninth time-slot denoted 305b in Figure 3, the first frequency channel 211 is assigned for uplink and the second frequency channel 212 is assigned for downlink. That is, the first and second frequency channels are not aligned in the third 305a and ninth 305b time-slots shown in Figure 3.

In order to reduce interference between the first and second frequency channels 211, 212 (particularly in the third 305a and ninth 305b time-slots in which uplink and downlink are not aligned) the uplink and downlink transmissions are restricted to a first bandwidth 303 which is less than the full bandwidth 304 of the first frequency channel 211. In the example shown in Figure 3, frequency guard bands 302 are used at both edges of the first frequency channel 211 in order to reduce interference with neighbouring frequency channels.

In some situations, a reduced bandwidth 303 may be used for a subset of all devices. For example, communication with a base station 101 may utilise a reduced bandwidth 303 for a first group of terminals 10 situated within its coverage area and may utilise the full bandwidth 304 of the first frequency channel 211 for a second group of terminals 10. When exchanging communications with the first group of terminals 10, the base station 101 may use time-slots for uplink or downlink when another base station 102 (situated within interference range) uses the other of uplink and downlink in the same time-slot. For example, as was explained above, in the third time-slot 305a and the ninth time-slot 305b, the first base station 101 assigns the time-slot 305a, 305b for uplink and the second base 102 assigns the time-slot 305a, 305b for downlink. This lack of alignment in the first and second channels is possible because of the reduced bandwidth 303 used in the first frequency channel 211 and the presence of a guard band 302 between the first and second frequency channels, thereby reducing interference between the channels.

As was described above with reference to Figure 3, the first group of terminals may be able to utilise one or more time-slots in the first frequency channel 211 for uplink or downlink, whilst not being aligned with time-slots assigned for uplink or downlink in the second frequency channel 212. However, in order to allow for this non-alignment, a reduced frequency bandwidth 303 is used by the first group of terminals for all time-slots. As a consequence of the reduced bandwidth 303 which is used by the first group of terminals, a rate at which data may be exchanged with the first group of terminals may be reduced.

In contrast to the first group of terminals, the second group of terminals which utilise the full bandwidth 304 of the first frequency channel 211 may be restricted to using time-slots in which the type of transmission is aligned with the second frequency channel 212. For example, the second group of terminals may be restricted from performing uplink in the third 305a and ninth 305b time-slots since the same time-slots are assigned for downlink in the second frequency channel 212 (as is shown for example in Figure 2). Whilst the second group of terminals may be able to utilise the full bandwidth 304 of the first frequency channel 211, the second group of terminals may be restricted to synchronising their type of transmission with the second frequency channel. That is, no changes to the time-slots assigned for uplink and downlink in the second frequency channel 211 may be made for the second group of devices in the first frequency channel 211. The second group of devices may therefore suffer from the same disadvantages as those which were described above with reference to Figure 2.

Figure 4 is a schematic representation of a TDD mode of operation in two neighbouring frequency channels 211, 212 according to examples of the present disclosure. The representation shown in Figure 4 is similar to those which were described above with reference to Figures 2 and 3. That is, the first frequency channel 211 may represent a frequency channel 211 used by a first base station 101 and the second frequency channel 212 may represent a frequency channel 212 used by a second base station 102 which is situated within interference range of the first base station 101. The same reference numerals are used in Figures 2, 3 and 4 to denote corresponding features and not repeated detailed description of these features is provided with reference to Figure 4.

In the example shown in Figure 4, in a third time-slot 405a and a ninth time-slot 405b, a type of transmission assigned in the first frequency channel 211 is different to the type of transmission assigned in the same time-slot in the second frequency channel 212. That is, the first 211 and second 212 frequency channels are not aligned in the third 405a and ninth time-slots 405b. In particular, in the first frequency channel 211 the third 405a and ninth 405b time-slots are assigned for uplink, whereas in the second frequency channel 212 the third 405a and ninth 405b time-slots are assigned for downlink. In order to reduce interference between the first and second frequency channels, a reduced frequency bandwidth 303 is used in the third 405a and ninth 405b time-slots and in the first frequency channel 211. For example, as is shown in Figure 4 frequency guard bands 302 may be used at both edges of the first frequency channel 211 in the third 405a and ninth 405b time-slots.

As can be seen in Figure 4, in the remaining time-slots 201 (i.e. all time-slots other than the third time-slot 405a and the ninth time-slot 405b) the type of transmission is aligned between the first 211 and second 212 frequency channels. That is, the same of uplink and downlink is used in both the first 211 and second 212 frequency channels in the remaining time-slots 201. According to examples presented herein (and as shown in Figure 4), the full bandwidth 304 of the first frequency channel 211 may be used in time-slots 201 in which the type of transmission is aligned between the first and second frequency channels. This differs from the example shown in Figure 3 in which a reduced bandwidth 303 is used in each time-slot.

As alluded to above, in the example of Figure 4 each of the time-slots 201 are assigned a frequency bandwidth within the first frequency channel 211. The third 405a and ninth 405b time-slots are assigned a first bandwidth 303 and the remaining time-slots 201 are assigned a second bandwidth 304, where the first bandwidth 303 is less than the second bandwidth 304. In particular, the third 405a and ninth 405b time-slots are assigned a first range of frequencies having the first bandwidth 303. The remaining time-slots 201 are assigned a second range of frequencies having the second bandwidth 304. As is shown in Figure 4, the first range of frequencies may be a sub-range of (e.g. contained within) the second range of frequencies. That is, the lower limit of the first range of frequencies is the same or greater than the lower limit of the second range of frequencies and the upper limit of the first range of frequencies is the same or less then the upper limit of the second range of frequencies. As is further shown in Figure 4, the first range of frequencies may be separated from at least one edge of the frequency channel 211 by at least one frequency guard band 302. The second range of frequencies may span substantially all of the frequency channel 211 so as to utilise substantially all of the bandwidth 304 of the frequency channel 211.

The first bandwidth 303 may be assigned to time-slots 405a, 405b in which the type of transmission in the first frequency channel 211 is not aligned with the type of transmission in the second frequency channel 212. By using the reduced first bandwidth 303 in these time-slots a frequency separation in the form of a guard band 302 is introduced in between transmissions in the first frequency channel 211 and those in the second frequency channel. This frequency separation reduces interference between the two frequency channels in time-slots 405a, 405b in which the type of transmission is different in the first and second frequency channels 211, 212. As will be explained in further detail below, the use of a reduced bandwidth 303 in non-aligned time-slots 405a, 405b may allow a base station 101 to dynamically change the allocation of time-slots to uplink and downlink as needed.

The second bandwidth may be assigned to time-slots 201 in which the type of transmission in the first frequency channel 211 is aligned with the type of transmission in the second frequency channel 212. That is, the type of transmission (uplink or downlink) is the same in the first 211 and second 212 frequency channels. As was explained above, in such aligned time-slots, interference between the channels is restricted to base station to terminal or terminal to base station interference. This allows the wider second bandwidth 304 to be used in the aligned time-slots, thereby improving the rate of data transfer which is possible in these time-slots (when compared to the reduced first bandwidth 303).

A method of the type described above with reference to Figure 4, therefore allows the use of a transmission type (uplink or downlink) in the first frequency channel 211 which is not aligned with the transmission type which is used in the same time-slot in the second frequency channel 212. Such methods also allow a wider bandwidth 304 to be used in the first frequency channel 211 during time-slots in which the type of communication is aligned with the second frequency channel 212. That is, the full bandwidth 304 of the frequency channel 211 may be utilised in aligned time-slots, thereby improving the achievable data rates in those time-slots.

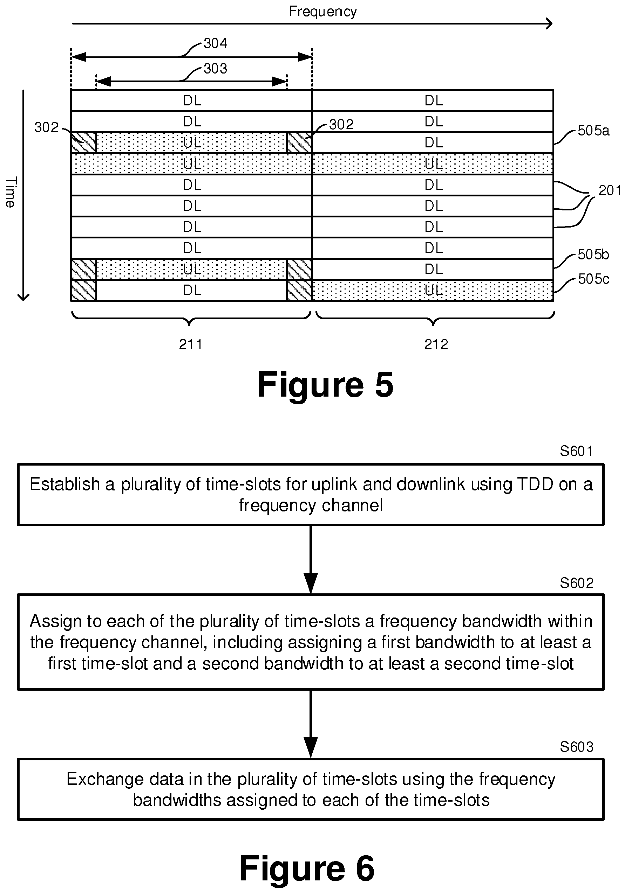

The establishment of time-slots 201 for uplink and downlink is typically carried out by a base station 101. In examples contemplated herein, a base station 101 may also be responsible for assigning a bandwidth to use in each time-slot 201. As was explained above with reference to Figure 4, at least one of the time-slots 405a, 405b may be assigned a first frequency bandwidth 303 and at least one of the time-slots 201 may be assigned a second frequency bandwidth 304, where the first 303 and second 304 bandwidths are different to each other. In at least some examples contemplated herein, different frequency bandwidths may be assigned to different time-slots which are established for the same type of transmission (uplink or downlink). For example, as is shown in Figure 4, at least one of the time-slots established for uplink are assigned the second frequency bandwidth 304, whereas other time-slots 405a, 405b which are also established for uplink are assigned the first frequency bandwidth 303. That is, different frequency bandwidths 303, 304 are assigned for different time-slots which are established for uplink. Additionally or alternatively, and as will be described in further detail with reference to Figure 5, different frequency bandwidths 303, 304 may be assigned for different time-slots which are established for downlink.

As was further described above, a first base station 101 may assign the first bandwidth 303 to those time-slots 405a, 405b in which the type of transmission (uplink or downlink) is not aligned with the type of transmission in a neighbouring frequency channel 212. The neighbouring frequency channel may be utilised by a second base station 102 situated within interference range of the first base station 101. The first base station 101 may assign a second bandwidth 304 to time-slots in which the type of transmission is aligned with the type of transmission in the neighbouring frequency channel 212.

It will be appreciated that uplink transmissions are made from a device such as a terminal 11, 12. In order for an uplink transmitting device (e.g. a terminal) to establish the frequency bandwidth which is to be used in a given time-slot, a base station 101 may transmit an indication of the frequency bandwidth to be used in a given time-slot. For example, a base station 101 may transmit to a terminal 11, an indication that a first frequency bandwidth 303 is to be used in, for example, third 405a and ninth 405b time-slots. The terminal 11 may receive the indication and accordingly transmit data in the third 405a and ninth 405b time-slots using the first frequency bandwidth 303 which was indicated by the base station 101.

A base station 101 may establish time-slots for uplink and downlink of data and assign a frequency bandwidth to each of a plurality of time-slots prior to exchanging data with a device 11 in any of the time-slots. In such examples, the base station 101 may transmit an indication of the frequency bandwidths assigned to a plurality of time-slots prior to exchanging data in any of the time-slots. For example, with reference to Figure 4, a base station 101 may transmit an indication that uplink in the third 405a and ninth 405b time-slots is to be performed using the first frequency bandwidth 303 prior to exchanging data using any of the time-slots. Such a method of providing an indication maybe referred to herein as providing a static indication of a frequency bandwidth to be used during one or more time-slots.

Such an indication may be provided in any suitable form. For example, a general indication may be provided that for transmission during a given one or more time-slots 405a, 405b in a sequence of time-slots (e.g. a frame) a given frequency bandwidth (e.g. the first frequency bandwidth 303) should be used. A device 11 which receives such an indication may subsequently for any uplink transmissions in the given one or more time-slots 405a, 405b use the given frequency bandwidth 303. This may, for example, be applied over a plurality of different frames. For example, a single indication may be provided of frequency bandwidths to be used during different time-slots in a frame and a device 11 may use the indicated frequency bandwidths when performing uplink in a plurality of different frames.

In such examples, the allocation of time-slots on which to perform uplink and downlink may be different for different frames. For example with reference to Figure 4, a base station 101 may transmit an indication that if uplink is to be performed on a third 405a or ninth 405b time-slot in a frame then the first frequency bandwidth 303 is to be used. The base station 101 may further provide an indication (either together or separately) that if uplink is to be performed on the fourth or tenth time-slots in a frame then the second frequency bandwidth 304 is to be used. This information may be stored at a device and applied to uplink of data in a plurality of different frames. For example, in a first frame, a fourth time-slot may be established for uplink and a device may accordingly use the second frequency bandwidth 304 to transmit uplink data in the fourth time-slot. In a second frame, a third time-slot 405a may be established for uplink and a device may accordingly use the first frequency bandwidth 303 to transmit uplink data in the third time-slot 405a. In this manner, the frequency bandwidths to be applied to different time-slots may be predetermined (e.g. according to the time-slots used for uplink and downlink in a neighbouring frequency channel 212). However, which time-slots to use for uplink and downlink may be established dynamically and may be different for different frames.

Additionally or alternatively, a base station 101 may establish time-slots for uplink and downlink of data and assign a frequency bandwidth to each of a plurality of time-slots dynamically and during an exchange of data with a device 11. For example, with reference to Figure 4, a base station 101 may transmit downlink data to a device 11 in the first two time-slots 201 shown in Figure 4 and in the first frequency channel 211 using the second frequency bandwidth 304. The base station 301 may during or after the first two time-slots determine that the third time-slot 405a is to be used for uplink and accordingly assign the first frequency bandwidth 303 to the third time-slot 405a. The base station 301 may therefore assign a frequency bandwidth and/or send an indication of the frequency bandwidth to be used in at least one of the time-slots after exchanging data with a device 11 in at least some of the time-slots 201. Such a method of providing an indication may be referred to herein as providing a dynamic indication of a frequency bandwidth to be used during one or more time-slots.

It will be appreciated that an indication of a frequency bandwidth to be used in one or more time-slots as described herein may be provided in any suitable form. For example, an indication may be included as part of Radio Resource Control (RRC) signalling. This may, for example, be especially applicable when providing a static indication of a frequency bandwidth as described above.

Additionally or alternatively, an indication may be transmitted on a Physical Downlink Control Channel (PDCCH). For example, an indication may be included in Downlink Control Information (DCI). Additionally or alternatively, an indication may be included in a Medium Access Control (MAC) element. Such forms of indication may, for example, be especially applicable when providing a dynamic indication of a frequency bandwidth as described above.

Examples, have been described above in which at least one time-slot 405a, 405b which is allocated for downlink in a neighbouring frequency channel 212 is allocated for uplink in a first frequency channel 211. As was further described above, interference in such time-slots may be reduced by using a reduced bandwidth 303 in such time-slots. Such an allocation of one or more time-slots 405a, 405b for uplink (which are allocated in a neighbouring frequency channel 212) may be used in situations in which it is desirable to increase a proportion of time-slots in which uplink can be performed, or to change a position in a frame for performing uplink.

For example, in some applications it may be desirable for a device 11 to which downlink data is being transmitted to provide acknowledgements of the correct receipt or otherwise of the downlink data. Such acknowledgements may be transmitted as uplink data during a time-slot established for uplink. In some applications it may be desirable to increase a frequency of providing acknowledgements and/or to provide an acknowledgement earlier in a sequence of time-slots. In such situations a time-slot which is allocated for downlink in a neighbouring frequency channel 212 may be allocated for uplink in the first frequency channel 211 using the methods described herein. This advantageously provides flexibility as to which time-slots can be used for uplink whilst also reducing any interference between frequency channels which may result from non-alignment of transmission type between neighbouring frequency channels 211, 212.

Whilst examples have been described above in which one or more time-slots which are assigned for downlink in a neighbouring frequency channel are assigned for uplink in a first frequency channel 211, the methods describe herein may additionally or alternatively be used to assign different or additional time-slots for downlink. One such example is illustrated in Figure 5 which is a schematic representation of a TDD mode of operation in two neighbouring frequency channels according to a further example of the present disclosure.

The representation shown in Figure 5 is similar to those which were described above with reference to Figures 2-4. That is, the first frequency channel 211 may represent a frequency channel 211 used by a first base station 101 and the second frequency channel 212 may represent a frequency channel 212 used by a second base station 102 which is situated within interference range of the first base station 101. The same reference numerals are used in Figures 2-5 to denote corresponding features and not repeated detailed description of these features is provided with reference to Figure 5.

In the example shown in Figure 5, as was also shown in Figure 4 and described above, a third 505a and ninth 505b time-slot are assigned for uplink using a first frequency bandwidth. The example of Figure 5 differs from the example of Figure 4, in that a tenth time-slot 505c is assigned for downlink in the first frequency channel 211 and is assigned for uplink in the second frequency channel 212. Similarly to the examples described above, a reduced frequency bandwidth 303 is assigned to the tenth time-slot 505c in order to reduce any interference which may result from the mis-alignment of transmission type in the tenth time-slot 505c. The reduced bandwidth 303 which is used in the tenth time-slot 505c may be the same as the first bandwidth used in the third 505a and ninth 505b time-slots or may be a different frequency bandwidth which is less than the second frequency bandwidth 304.

In the example, shown in Figure 5 different frequency bandwidths are used for different time-slots in which downlink is performed. For example, downlink may be performed in the first, second and fifth to eighth time-slots using a second bandwidth 304 (which may be substantially the entire bandwidth of the frequency channel 211), whereas in the tenth time-slot 505c a first frequency bandwidth 303, which is less than the second frequency bandwidth 304 may be used.

In some examples, a base station may transmit an indication of the frequency bandwidth to be used in a time-slot assigned for downlink, which is assigned for uplink in a neighbouring frequency channel 212 (e.g. the tenth time-slot 505c of the example of Figure 5). Such an indication may take the form of the indications described above with reference to Figure 4. However, it will be appreciated that downlink transmission are made by the base station 101, which typically is also responsible for establishing the type of transmission and the frequency bandwidth to be used in each time-slot. The base-station 101 need not necessarily therefore transmit an indication of the frequency bandwidth to be used in time-slots assigned for downlink but instead simply transmit downlink data using the frequency bandwidth assigned to the relevant time-slot. That is, a device 11 receiving downlink data from a base station 101 need not necessarily be sent an indication of the frequency bandwidth with which the downlink data is being transmitted.

Whilst examples have been described above in the context of exchanging data between a base station 101 and a terminal 11, the methods describe herein may be applied to exchanges of data between any two or more devices or nodes in a mobile telecommunications network and using a TDD mode of operation. For example, the methods described herein may be applied to any first and second device operating in a mobile telecommunications network and exchanging data with each other. Typically, one of the first device and second device is responsible for establishing a plurality of time-slots for uplink and downlink of data and assigning frequency bandwidths to the plurality of time-slots.

Within the context of this specification a first device (e.g. a first base station 101) will be generally be considered to be a device from which downlink data is transmitted and at which uplink data is received. The first device may a device at which a plurality of time-slots for uplink and downlink of data is established and at which a frequency bandwidth is assigned to each time-slot. In some examples, the time-slots for uplink and downlink and/or the frequency bandwidths may be first determined at another device or network node and may be provided to the first device. However, since the time-slots and/or frequency bandwidths are provided to the first device prior to transmission of downlink data and receipt of uplink data, the first device is still considered to establish the time-slots and assign the frequency bandwidths. A second device will generally be considered to be a device at which downlink data is received and from which uplink data is transmitted. The second device may transmit uplink data and/or receive downlink data according to the plurality of time-slots established and assigned at the first device.

Figure 6 is a flowchart depicted a method of exchanging data between a first device and a second device according to examples of the present disclosure. The steps set out in Figure 6 may be performed by a first device as contemplated herein. For example, the steps set out in Figure 6 may be performed by a base station 101.

At step 601, a plurality of time-slots for uplink and downlink using a TDD mode of operation on a frequency channel allocated for the TDD operation are established. The plurality of time-slots may, for example, comprise sub-frames for use in a TDD mode of operation. The frequency channel may neighbour a second frequency channel which is also used for a TDD mode of operation. For example, a further device such as a second base station 102, which is situated within interference range of the first device may use a TDD mode of operation on a second frequency channel which neighbours the frequency channel used by the first device for a TDD mode of operation.

At step 602 a frequency bandwidth is assigned to each of the plurality of time-slots established at step 601. Step 602 includes assigning a first frequency bandwidth to at least a first time-slot and a second frequency bandwidth to at least a second time-slot. The first bandwidth is different to the second bandwidth. For example, the first bandwidth may be less than the second bandwidth. The first bandwidth may be assigned to at least a first time-slot assigned for one of uplink or downlink and the second frequency bandwidth may be assigned to at least a second time-slot assigned for the same of uplink and downlink. For example, at least one time-slot established for uplink may be assigned the first frequency bandwidth and at least one time-slot established for uplink may be assigned the second frequency bandwidth. Additionally or alternatively, at least one time-slot established for downlink may be assigned the first frequency bandwidth and at least one time-slot established for downlink may be assigned the second frequency bandwidth. That is, either or both of uplink and downlink may be performed using different frequency bandwidths during different time-slots.

The first frequency bandwidth may be assigned to a time-slot in which the type of transmission (uplink or downlink) which is allocated for the time-slot is different to the type of transmission allocated for the same time-slot and in a neighbouring frequency channel. For example, the first bandwidth may be assigned to a time-slot which is allocated for uplink in a first frequency channel allocated for TDD operation at the first device when the same time-slot is allocated for downlink in a neighbouring second frequency channel. Additionally or alternatively, the first bandwidth may be assigned to a time-slot which is allocated for downlink in a first frequency channel allocated for TDD operation at the first device when the same time-slot is allocated for uplink in a neighbouring second frequency channel. That is, the first frequency bandwidth may be assigned to a time-slot in which the type of transmission (uplink or downlink) is not aligned with a type of transmission in a neighbouring frequency band. As was explained above, the neighbouring frequency band may be used for TDD operation by a further device (e.g. a second base station) situated within interference range of the first device.

The second frequency bandwidth may be assigned to a time-slot in which the type of transmission (uplink or downlink) which is allocated for the time-slot is different to the type of transmission allocated for the same time-slot in the neighbouring frequency channel. That is, the second frequency bandwidth may be assigned to a time-slot in which the type of transmission (uplink or downlink) is aligned with a type of transmission in a neighbouring frequency band.

At step 603 data is exchanged between the first device and the second device in the plurality of time-slots established in step 601 and using the frequency bands assigned in step 603. Exchanging data between the first device and the second device may include transmitting downlink data from the first device to the second device and receiving uplink data from the second device at the first device. Exchanging data using the first frequency bandwidth may comprise exchanging data over a first range of frequencies having the first frequency bandwidth. Exchanging data between the first device and the second device in the using the second frequency bandwidth may comprise exchanging data over a second range of frequencies having the second frequency bandwidth. The first range of frequencies may be a sub-range of (e.g. contained within) the second range of frequencies. The first range of frequencies may be separated from at least one edge of the frequency channel (assigned to TDD operation between the first and second devices) by at least one frequency guard band. For example, the first range of frequencies may be separated from an edge of the frequency channel which neighbours a second frequency channel in which a TDD operation is also employed. As was explained above, the neighbouring second frequency band may be used for TDD operation by a further device (e.g. a second base station) situated within interference range of the first device. The second range of frequencies may span substantially all of the frequency channel.

Whilst not shown in Figure 6, optionally the method may further include transmitting from the first device and to the second device, an indication of the frequency bandwidths assigned to each time-slot. Separately or in the same transmission, the first device may further transit an indication of the type of transmission (uplink or downlink) allocated to each time-slot. Any such indication may be transmitted in any suitable form. For example, an indication may be transmitted as at least one of RRC signalling, DCI and a MAC element.

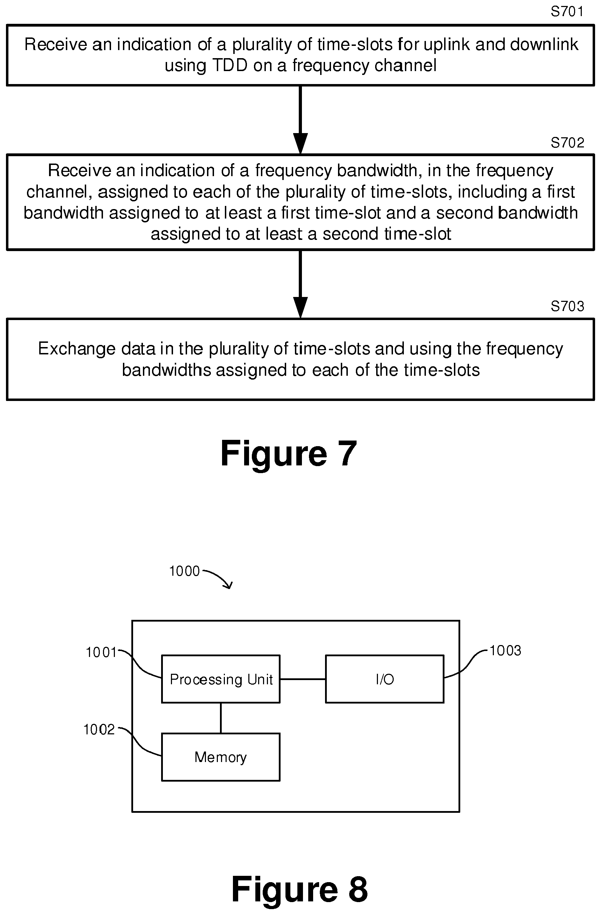

Figure 7 is a flowchart depicted a method of exchanging data between a first device and a second device according to examples of the present disclosure. The steps set out in Figure 7 may be performed by a second device as contemplated herein. For example, the steps set out in Figure 6 may be performed by a terminal such as a UE. The steps set out in Figures 6 and Figure 7 may form part of the same method of exchanging data between the first and second devices.

At step 701 an indication of a plurality of time-slots for uplink and downlink using TDD on frequency channel assigned for a TDD mode of operation is received at the second device. The indication may be received from the first device. The plurality of time-slots may correspond to the plurality of time-slots established at step 601 of the method of Figure 6. Any of the features described above with reference to step 601 may also apply to step 701.

At step 702 an indication of a frequency bandwidth assigned to each of the plurality of time-slots is received at the second device. The indication may be received from the first device. The indication received at step 702 may form part of the same transmission as the indication received at step 701. Alternatively, the indications of steps 701 and 702 may be received separately. The frequency bandwidths may correspond to the frequency bandwidths assigned at step 602 of Figure 6. Any of the features described above with reference to step 602 may also apply to step 702.

At step 703 data is exchanged between the first device and the second device in the plurality of time-slots indicated in step 701 and using the frequency bands indicated in step 702. Exchanging data between the first device and the second device may include receiving downlink data from the first device at the second device and transmitting uplink data from the second device to the first device. Step 703 of Figure 7 may correspond to step 603 of Figure 6. Any of the features described above with reference to step 603 may also apply to step 703.

According to at least some examples contemplated herein, a first device may comprise a base station 101. Additionally or alternatively, a second device may comprise a terminal such as a UE. However, the methods and teachings provided herein may be applicable to any suitable devices.

Various examples of network nodes and/or devices such as base stations and terminals have been described above. In general any network node or device described herein may be implemented in the form of one or more electronic devices. Figure 8 is a schematic illustration of an example electronic device for use in a network. The general structure of the device depicted in Figure 8 may be applicable to any device and/or network node of the present disclosure.

The device 1000 may include at least one processing unit 1001, memory 1002 and an input/output (I/O) interface 1000. The processing unit 1001 may include any suitable processer and/or combination of processors. For example, the processing unit 1001 may include one or more of a Central Processing Unit (CPU) and a Graphical Processing Unit (GPU). The memory 1002 may include volatile memory and/or non-volatile/persistent memory. The memory 1002 may, for example, be used to store data such as an operating system, instructions to be executed by the processing unit (e.g. in the form of software to be executed by the processing unit), configuration information related to the device 1000, session information and/or configuration or registration information associated with any other device, node or module in the network. For example, the memory 1002 may be used to store a plurality of time-slots allocated for uplink and downlink using a TDD mode of operation. Additionally or alternatively, the memory 1002 may be used to store at least one frequency bandwidth assigned to each of a plurality of time-slots allocated for uplink and downlink using a TDD mode of operation. In some examples, the memory 1002 may be used to store instructions which, when carried out, cause a method as described herein to be implemented.

At least the processing unit 1001 is connected to an input/output (I/O) interface 1003. The I/O interface 100 facilitates communication with one or more other devices, network nodes or modules in a network. For example, the I/O interface 1003 may be operable to transmit and/or receive communications to/from other devices in a network. In some examples, the I/O interface 1003 may be operable to transmit and/or receive communications over an air interface. For example, the I/O interface 1003 may include a transmitter and/or a receiver for transmitting and/or receiving wireless communication (e.g. radio frequency signals). In some examples, the I/O interface 1003 may include a transceiver configured to receive and transmit wireless communication (e.g. radio frequency signals). In some examples, the I/O interface 1003 may be operable to additionally or alternatively communicate over one or more wired connections.

In the interest of conciseness not all possible alternatives which fall within the scope of the present disclosure have been explicitly discussed herein. As the skilled person will appreciate, in the present disclosure any aspect discussed from the perspective of an element being operable to do an action also discloses the same feature from the perspective of a method including a method step corresponding to the action. Similarly, any discussion presented from the perspective of a method step also discloses the same features from the perspective of any one or more suitable elements being operable or configured to carry out some or all of the method step. It is also considered within the present disclosure that for any method step(s), there can be a computer program configured to carry out, when executed, the method step(s).

Within the context of the present disclosure a device, such as a terminal, a base station, or a network module or node, is generally considered from a logical perspective, as the element carrying out the appropriate function. Any such device may be implemented using one or more physical elements as deemed appropriate. For example, it may be implemented in one (or more) of: a standalone physical device, in two or more separate physical devices, in a distributed system, in a virtual environment using any suitable hardware or hardware combination, etc.

It will be appreciated that examples of the present disclosure can be realised in the form of hardware, software or a combination of hardware and software.

Features, integers, characteristics, or groups described in conjunction with a particular aspect, embodiment or example of the invention or present disclosure are to be understood to be applicable to any other aspect, embodiment or example described herein unless incompatible therewith. All of the features disclosed in this specification (including any accompanying claims, abstract and drawings), and/or all of the steps of any method or process so disclosed, may be combined in any combination, except combinations where at least some of such features and/or steps are mutually exclusive. The invention is not restricted to the details of any foregoing examples.

## Claims

1. A method of exchanging data between a first device and a second device in a mobile telecommunications network, the method comprising:
establishing a plurality of time-slots for uplink and downlink of data using a Time Division Duplex, TDD, operation on a frequency channel allocated for the TDD operation;
assigning to each of the plurality of time-slots a frequency bandwidth within the frequency channel, wherein at least a first of the time-slots is assigned a first frequency bandwidth and at least a second of the time-slots is assigned a second frequency bandwidth, the first frequency bandwidth being less than the second frequency bandwidth; and
exchanging data between the first device and the second device in the plurality of time-slots and using the frequency bandwidths assigned to each of the time-slots.

2. The method of claim 1, further comprising transmitting from the first device to the second device an indication of the frequency bandwidths assigned to each time-slot.

3. The method of claim 1 or 2, further comprising transmitting from the first device to the second device, an indication of at least one time-slot allocated for uplink and at least one time-slot allocated for downlink.

4. The method of any preceding claim, wherein assigning to each of the plurality of time-slots a frequency bandwidth within the frequency channel comprises assigning the first frequency bandwidth to at least a first time-slot allocated for one of uplink or downlink and the second frequency bandwidth to a time-slot allocated for the same of uplink or downlink second.

5. The method of any preceding claim, wherein the at least a first time-slot to which the first frequency bandwidth is assigned comprises a time-slot which is allocated for one of uplink or downlink at the first device and which is allocated for the other of uplink or downlink at a third device situated within interference range of the first device.

6. The method of any preceding claim, wherein exchanging data between the first device and the second device in the at least a first of the times slots and using the first frequency bandwidth assigned to the at least a first of the time-slots comprises exchanging data over a first range of frequencies having the first frequency bandwidth, and wherein exchanging data between the first device and the second device in the at least a second of the times slots and using the second frequency bandwidth assigned to the at least a second of the time-slots comprises exchanging data over a second range of frequencies having the second frequency bandwidth.

7. The method of claim 6, wherein the first range of frequencies is a sub-range of the second range of frequencies.

8. The method of claim 6 or 7, wherein the first range of frequencies is separated from at least one edge of the frequency channel by at least one frequency guard band.

9. The method of any of claims 6-8, wherein the second range of frequencies spans substantially all of the frequency channel.

10. The method of any preceding claim, wherein the frequency bandwidths are assigned to each of the plurality of time-slots prior to exchanging data between the first and second devices in any of the plurality of time-slots.

11. The method of any preceding claim, wherein at least a portion of the frequency bandwidths are assigned to at least a portion of the plurality of time-slots after exchanging data between the first and second devices in at least some of the plurality of time-slots.

12. A method of exchanging data between a first device and a second device in a mobile telecommunications network, the method comprising:
receiving at the second device and from the first device:
an indication of a plurality of time-slots for uplink and downlink of data using a Time Division Duplex, TDD, operation on a frequency channel allocated for the TDD operation; and
an indication of a frequency bandwidth, within the frequency channel, which is assigned to each time-slot, wherein the plurality of time-slots includes at least a first time-slot to which a first frequency bandwidth is assigned and at least a second time-slot to which a second frequency bandwidth is assigned, the first frequency bandwidth being less than the second frequency bandwidth; and
exchanging data between the first device and the second device in the plurality of time-slots and using the frequency bandwidths assigned to each of the time-slots.

13. A computer program comprising instructions which, when carried out, cause a method according to any of claims 1-12 to be implemented.

14. A first device for exchanging data with a second device in a mobile telecommunications network, the first device being configured to:
establish, a plurality of time-slots for uplink and downlink of data using a Time Division Duplex, TDD, operation on a frequency channel allocated for the TDD operation;
assign to each of the plurality of time-slots a frequency bandwidth within the frequency channel, wherein at least a first of the time-slots is assigned a first frequency bandwidth and at least a second of the time-slots is assigned a second frequency bandwidth, the first frequency bandwidth being less than the second frequency bandwidth; and
exchange data with the second device in the plurality of time-slots and using the frequency bandwidths assigned to each of the time-slots.

15. A second device for exchanging data with a first device in a mobile telecommunications network, the second device being configure to:
receive from the first device:
an indication of a plurality of time-slots for uplink and downlink of data using a Time Division Duplex, TDD, operation on a frequency channel allocated for the TDD operation; and
an indication of a frequency bandwidth, within the frequency channel, which is assigned to each time-slot, wherein the plurality of time-slots includes at least a first time-slot to which a first frequency bandwidth is assigned and at least a second time-slot to which a second frequency bandwidth is assigned, the first frequency bandwidth being less than the second frequency bandwidth; and
exchange data with the second device in the plurality of time-slots and using the frequency bandwidths assigned to each of the time-slots.
